(19) **Europäisches Patentamt / European Patent Office / Office européen des brevets**

(11) **EP 1 323 564 B1**

(12) **EUROPEAN PATENT SPECIFICATION**

(45) Date of publication and mention of the grant of the patent:
**12.11.2008 Bulletin 2008/46**

(51) Int Cl.:
*B60K 6/26* (2007.10)  *F02D 41/00* (2006.01)

(21) Application number: **02026813.2**

(22) Date of filing: **28.11.2002**

(54) **Control system for hybrid vehicle**

Steuerungssystem eines Hybridfahrzeugs

Système de réglage pour véhicule hybride

(84) Designated Contracting States:
**DE FR GB**

(30) Priority: **28.12.2001 JP 2001399954**

(43) Date of publication of application:
**02.07.2003 Bulletin 2003/27**

(73) Proprietor: **NISSAN MOTOR CO., LTD.**
**Yokohama-shi,**
**Kanagawa 221-0023 (JP)**

(72) Inventor: **Yoshino, Takahiro**
**Yokosuka-shi,**
**Kanagawa 239-0822 (JP)**

(74) Representative: **Weber, Joachim**
**Hoefer & Partner**
**Patentanwälte**
**Pilgersheimer Strasse 20**
**81543 München (DE)**

(56) References cited:
**EP-A- 0 698 520**   **EP-A- 0 904 971**
**US-A- 6 155 954**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a control system of a hybrid vehicle and more particularly, to a control system of a hybrid vehicle which is capable of freely selecting an operating point of an engine so as to achieve the best fuel consumption operation.

Such a system is known from EP 0 698 520.

Japanese Patent Provisional Publication No. 2000-88010 ($\approx$ U.S. Patent No. 6155954) discloses an engine output control device which is arranged to correct an engine output upon taking account of the dispersion among respective systems and the dispersion due to time-varying and/or environment-varying.

SUMMARY OF THE INVENTION

Generally, it is possible to accurately control a torque of a generator in a hybrid vehicle, as compared with a torque control of an engine. Accordingly, the dispersion of generated electric power mainly depends on the dispersion of the torque of the engine. When the generator and the engine are operating independently of a drive line in the hybrid vehicle, the generated electric power is corrected by estimating an engine torque on the basis of a torque of the generator and correcting a control dispersion of the engine torque on the basis of the detected generator torque. Although this correction method brings the generated electric power closer to a target value, there is a possibility the fuel consumption is degraded by the correction of the generated electric power according to a correction method of correcting the dispersion of the engine torque.

It is therefore an object of the present invention to provide a control system of a hybrid vehicle which system is capable of ensuring a preferable drivability without degrading fuel consumption.

An aspect of the present invention resides in a control system for a hybrid vehicle, the hybrid vehicle being equipped with an internal combustion engine which is operable independent from a drive line of the hybrid vehicle and a rotating machine which has an electric power generating function, the engine and the rotating machine being rotatably interlocked; the control system comprising:

a torque correcting section that corrects a dispersion of a torque of the engine by controlling an intake air quantity of the engine;

a target generated electric power calculating section that calculates a target generated electric power of the rotating machine;

an engine control section that controls the torque of the engine on the basis of the target axial torque;

a rotating machine control section that controls a rotation speed of the rotating machine on the basis of the target rotation speed of the rotating machine;

a torque detecting that detects the torque of the engine;

a target torque calculating section that calculates a target torque of the engine from the target generated electric power, a rotation speed of the engine, and a torque correction quantity;

a target rotation speed calculating section that calculates the target rotation speed of the rotating machine from the target generated electric power and the torque correction quantity; and

a torque-correction-quantity calculating section that calculates the torque-correction-quantity from the target axial torque and the detected torque.

The other objects and features of this invention will become understood from the following description with reference to the accompanying drawings.

BRIEF DESCRIPTION OF THE DRAWINGS

Figs. 1A through 1C are graphs explaining a correction method adapted to torque dispersion of a hybrid vehicle, which method is employed in the embodiments of a control system according to the present invention.

Fig. 2 is a schematic view showing a hybrid vehicle which employs a control system according to the present invention.

Fig. 3 is a control block diagram of a first embodiment of the control system according to the present invention.

Fig. 4 is a control logic diagram for coordinately operating a generator, a motor and an engine in the processing of the control block of Fig. 3.

Fig. 5 is a control logic diagram of an operation mode determining section 305 in Fig. 3.

Fig. 6 is a control diagram of a target margin driving force calculating section 302 in Fig. 3.

Fig. 7 is a control logic diagram of a battery margin output calculating section 304 in Fig. 3.

Fig. 8 is a control logic diagram of a throttle opening correction quantity calculating section 314 in Fig. 3.

Fig. 9 is a control logic diagram of a target throttle opening offset learning update condition determining section in Fig. 8.

Fig. 10 is a control logic diagram of a target throttle opening offset learning update calculating section in Fig. 8.

Fig. 11 is a control logic diagram of a target engine torque correction quantity calculating section 307 in Fig. 3.

Fig. 12 is a control logic diagram of a second embodiment according to the control system of the hybrid vehicle of the present invention.

Fig. 13 is a control logic diagram of a coordinated command value generating section 308 in Fig. 12.

Fig. 14 is a control logic diagram of a target generated electric power correction quantity calculating section 307a in Fig. 12.

## DETAILED DESCRIPTION OF THE INVENTION

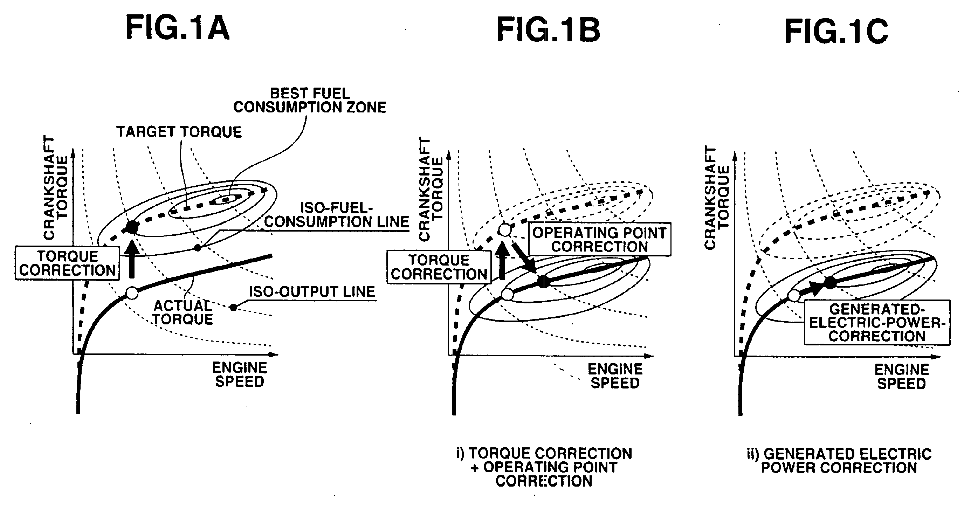

Referring to Figs. 1A through 1C, there will be discussed a fundamental correction method employed as a basic concept of a control system of a hybrid vehicle according to the present invention.

Fig. 1A shows a correction method in case that there is no friction in the engine operation, that is, in case that the dispersion of the torque detected by the generator is equal to the dispersion of the generated torque of the engine. Therefore, by executing a correction for bringing the detected torque closer to the target torque, the generated torque and the fuel consumption ratio of the engine are put in the previously predicted standard conditions. Since the dispersion of the generated torque mainly depends on the dispersion of an intake air quantity, it is solved by correcting a throttle opening as shown in Fig. 1A. That is, by this correction, the generation electric power is corrected, and the operating point of the engine is returned to the best fuel consumption line.

Fig. 1B shows a correction method of executing a torque correction and an operating point correction, which method is executed in case that in case that there is dispersion of friction and the dispersion of the torque. In addition to the correction of the dispersion of the generated torque executed in Fig. 1A, the correction of the operating point is executed. With this arrangement, the dispersion of the generated torque due to the dispersion of the friction is corrected by correcting a generator torque in addition to the correction of Fig. 1A. Since the torque is corrected, the generator efficiency estimate is simultaneously corrected, and therefore the operating point of the engine is quickly corrected.

If the generated torque is corrected only by correcting the throttle opening of the engine so as to bring the detected torque closer to the target torque even in case that the torque detected by the generator is dispersed by the dispersion of the friction, the generated torque of the engine deviates from an assumed standard condition even if the detected torque corresponds to the target torque. This prevents the best fuel consumption operation from being executed, and therefore the fuel consumption of the hybrid vehicle is degraded.

Fig. 1C shows a correction method only as to the friction dispersion in such a manner that the dispersion of the generated electric power due to the dispersion of the engine torque is corrected. When the torque is dispersed by the dispersion of the friction, the fuel consumption characteristic is also similarly is dispersed. Therefore, only by correcting the generated electric power of the generator, the engine maintains the best fuel consumption line. When the generated electric power is corrected so that the actual generated electric power is adjusted to the target value according to a best fuel-consumption line, it becomes possible to control a generator without deviating from the best fuel-consumption line.

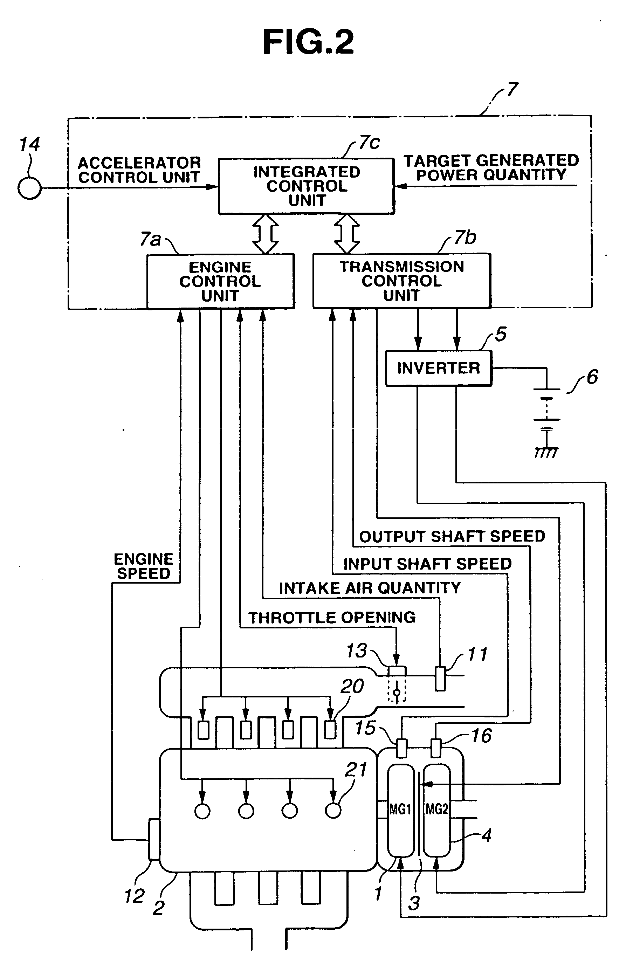

Referring to Figs. 2 through 11, there is shown a first embodiment of a control system for a hybrid vehicle according to the present invention.

Fig. 2 shows a hybrid vehicle to which the present invention is adapted. The hybrid vehicle comprises a first motor/generator (first rotating machine) 1, an internal combustion engine 2, a clutch 3 and a second motor/generator (second rotating machine) 4. A rotor shaft of first motor/generator 1 is connected (interlocked) to a crankshaft of an internal combustion engine 2 and an input shaft of clutch 3. An output shaft of clutch 3 is connected to a rotor shaft of second motor/generator 4. The rotor shaft of second motor/generator 4 is connected to drive wheels (not shown) through a continuously variable transmission (not shown) and a final reduction gear (not shown).

When clutch 3 is put in engaged state, engine 2 and second motor/generator 4 act as a driving source of the hybrid vehicle. When clutch 3 is put in disengaged state, only second motor/generator 4 acts as a driving source of the hybrid vehicle. Driving force generated by engine 2 and/or second motor/generator 4 is transferred to driving wheels through the drive line. First motor/generator 1 mainly acts as a starter of engine 2 and as a generator. Second motor/ generator 4 mainly acts as a device for generating driving/braking force.

When clutch 3 is put in engaged state, first motor/generator 1 is capable of generating both of the driving force and the braking force of the hybrid vehicle. Further, under the clutch engaged state, second motor/generator 4 is capable of acting as both of an engine starter and a generator.

An inverter 5 drives first motor/generator 1 and second motor/generator 4. In case that a direct-current electric motor is employed as first or second motor/generator 1 or 4, DC/DC converter is employed as an inverter. Inverter 5 is connected to a battery 5 for storing electric power for driving the vehicle. Direct-current electric power stored in battery 6 is converted into alternating-current electric power and supplied to first motor/generator 1 and second motor/generator 4. Further, alternating-current electric power of first motor/generator 1 and second motor/generator 4 is converted into direct-current electric power and is charged in battery 6. Inverter 5 is also capable of supplying the electric power generated by a regenerative operation of first motor/generator 1 directly to second motor/generator 4 in driving while bypassing battery 6.

A controller 7 has functions of various control means according to the present invention, and is constructed by a microcomputer including a CPU and peripheral devices thereof. Controller 7 comprises an engine control unit 7a, a transmission control unit 7b and an integrated control unit 7c for integrally controlling these control units 7a and 7b.

Engine control unit 7a receives an intake air quantity indicative signal from an airflow meter 11, one of a crank position indicative signal and an engine speed indicative signal from a crank angle sensor 12, and a throttle opening indicative signal from an electronically controlled throttle device 14. Integrated control unit 7c receives an accelerator manipulated variable indicative signal from an accelerator pedal sensor 14 and a target generated electric power quantity indicative signal. Engine control unit 7a executes an engine control using the above-mentioned signals and the signals received by integrated control unit 7c.

Engine control unit 7a controls a supply/stop of fuel to engine 2, a fuel injection quantity and an injection timing and executes an ignition timing control, by outputting a fuel injection signal to each fuel injector 20 of engine 2 and an ignition timing signal to each ignition coil 21 of engine 2 according an operating condition of a vehicle and/or engine 2. Electronically controlled throttle device 13 is mechanically separated from an accelerator pedal operated by a driver and electronically controls an opening of a throttle valve via a stepping motor.

Transmission control unit 7b receives signals indicative of rotation speeds of first motor/generator 1 and second motor/generator 4 from speed sensors 15 and 16, and signals indicative of the target generator power and various operating condition indicative signals from integrated control unit 7c. Transmission control unit 7b controls the engagement and disengagement of clutch 3, a generated electric power, a rotation speed and a torque of each of first motor/ generator 1 and second motor/generator 4 through inverter 5, using the received signals.

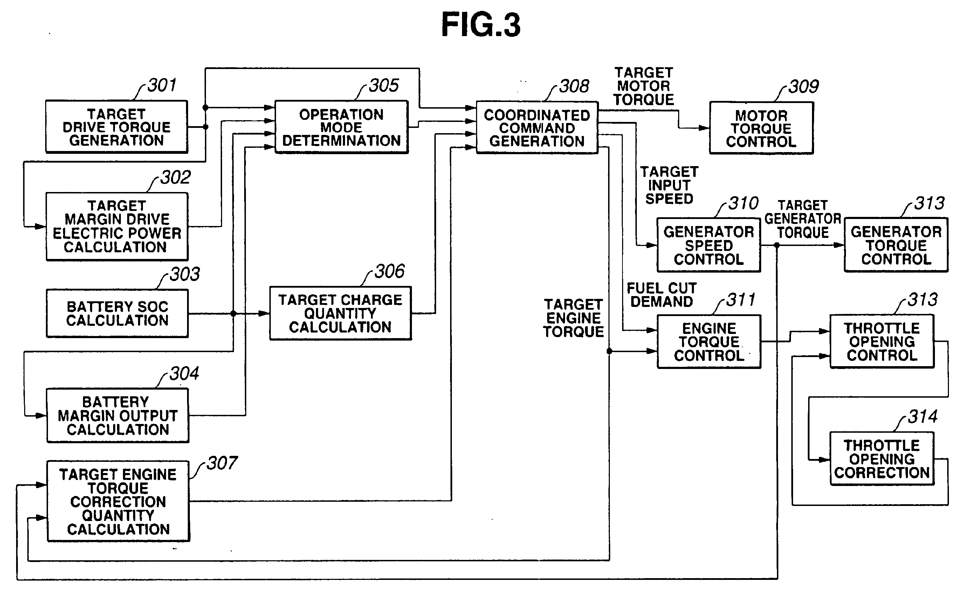

Subsequently, with reference to Figs. 3 through 11, there will be discussed the control processing of controller 7 of the first embodiment according to the present invention.

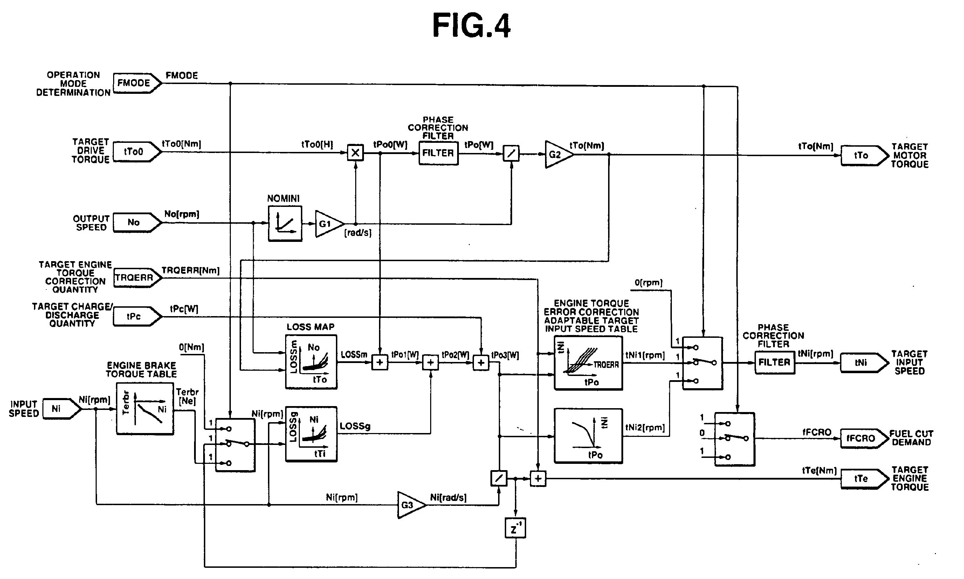

Fig. 3 is a block diagram of controller 7. Fig. 4 is a control logic diagram for obtaining a controlled target value of each of first motor/generator 1, second motor/generator 4 and engine 2 in order to cooperatively operate them.

A coordinated command generating section 308 in Fig. 3 obtains a target drive-output basic value tPo0 by multiplying a target drive torque basic value tTo0 obtained at a target drive torque generating section 301 and an output rotation speed equal to a speed of second motor/generator 4. This value tPo0 functions as a basic parameter for determining controlled target values of first motor/generator 1, second motor/generator 4 and engine 2. Second motor/ generator 4 receives a target motor output-shaft torque tTo from a motor torque control section 309. Target motor output-shaft torque tTo is obtained by applying a filtering process for correcting a responsibility of a driving force to value tPo0 and by again dividing the filtering-processed value by the output shaft rotation speed. The target drive torque is generated according to a driver's demand and a vehicle traveling condition, such as an accelerator pedal manipulated variable and the vehicle speed.

On the other hand, a target input power basic value tPo2 is obtained by adding a motor loss LOSSm and a generator loss LOSSg to target drive output basic value tPo0 (tPo2= tPo0+LOSSm+LOSSg). Further, target input power tPo3 is obtained by adding a target charge/discharge quantity tPc to target input power basic value tPo2 (tPo3=tPo2+tPc). Target charge/discharge quantity tPc is calculated on the basis of an SOC (State Of Charge) of battery 6. The SOC is supplied from a battery SOC calculating section 303. Target input power tPo3 functions as a basic value employed in calculations of a target input rotation speed supplied to a generator rotation speed control section 310 and a target engine torque to an engine torque control section 311. Generator rotation speed control section 310 controls the rotation speed and the torque of first motor/generator 1 by outputting a target generator torque command to a generator torque control section 312 on the basis of the target input rotation speed. Engine torque control section 311 controls the engine torque by outputting a throttle opening command to a throttle opening control section 313 on the basis of the target engine torque.

Motor loss LOSSm is retrieved from a motor loss map with reference to a motor rotation speed No and target motor output-shaft toque tTo. Generator loss LOSSg is retrieved from a generator loss map with reference to the input rotation speed equal to the speed of first motor/generator 1 and the target engine torque. The motor loss map and the generator loss map have been previously obtained based on experiments and stored in controller 7. Since a rotation speed control is adapted to first motor/generator 1, there is a tendency that the generator torque fluctuates in short period due to adjusting control to the target rotation speed.

Accordingly if the generator loss is obtained using the torque value fluctuated in short period, values tPo2 and tPo3 are also fluctuated, and target input rotation speed and the target engine torque are also fluctuated. Consequently, there is a possibility that the fluctuation of the generator torque is further increased by the operation for obtaining the generator loss using the generator torque.

In order to avoid such an undesirable fluctuation, the control system according to the present invention is arranged such that the generator loss is calculated using the target engine torque instead of the generator toque. When the fuel-cut to engine 2 is executed and when only first motor/generator 1 executes the driving operation, on the basis of the engine brake torque calculated based on the engine speed at each time instead of the target engine torque, the maps are retrieved.

A first target input shaft rotation speed basic value tNi1 is calculated by retrieving a table indicative of a relationship between a target input rotation speed adaptive to an engine torque error correction on the basis of target input power tPo3. The value tNi1 represents the previously determined rotation speeds of engine 2 and first motor/generator 1 relative to the target power during the generator operating condition. For example, with respect to each target power, that is, an arbitrary output of engine 2, the best combination of the rotation speed and the torque, which combination achieves the best consumption through the preferable efficiency of each of engine 2 and first motor/generator 1, has been previously determined.

During the driving operation of first motor/generator 1, a second target input-shaft rotation-speed basic-value tNi3 is obtained by retrieving another table with reference to target input power tPo3. According to the determination as to the drive mode of first motor/generator 1 such as stopping, generating and motoring, one of 0, tNi1 and tNi2 (rpm) is selected as a target rotation speed. Further, after the phase correction filtering process, coordinated command generating section 308 outputs the target input rotation speed to generator rotation speed control section 310 as a controlled target value of the generator rotation speed. The explanation as to the operation mode determination will be discussed later.

A target engine torque of engine 2 is obtained by dividing target input power tPo3 by present input rotation speed Ni of engine 2. In Fig. 4, a target input rotation table of an engine torque error correction adaptive type is arranged as follows.

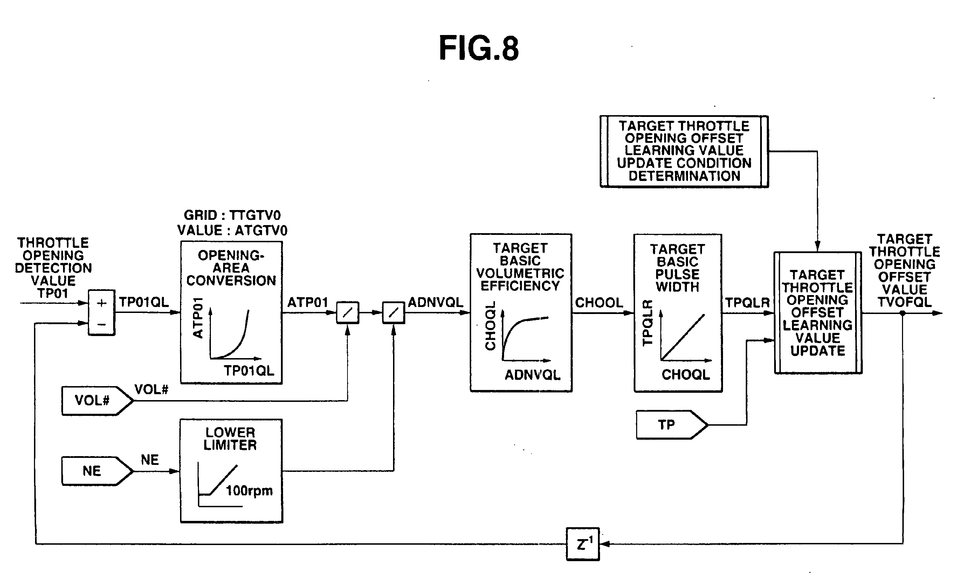

Input variable is power tPo and a target engine torque correction quantity TRQERR, and output variable is first target input-shaft rotation speed tNi1. tNi1 is a target input shaft rotation speed during the generator operating condition. Second target input shaft rotation speed tNi2 is a target input shaft rotation speed during the driving operation of first motor/generator 1. Controller 7 has previously stored the table data which has determined the target input shaft rotation speed relative to each power. That is, tNi1 is derived from the table data, using input tPo. tNi1 is set at a rotation speed from which a combination of the torque and the rotation speed of engine 2 achieves the minimum fuel consumption ratio of engine 2 relative to each tPo. Herein, since the target engine torque correction quantity represents a friction dispersion, the operating point of engine 2 is corrected on the basis of the target engine torque correction quantity. The generated torque dispersion is corrected by a target throttle opening offset learning shown in Fig. 8 and will be discussed later.

If the basic table data is constructed by the combination of power Pi and rotation speed Ni where i takes 1 through n and if target engine torque correction quantity is represented by $\Delta T$, the operating point under power Pi is the point determined by the rotation speed Ni and the torque Pi/Ni. If there is no dispersion, the fuel consumption ratio of engine 2 becomes minimum at this operating point. At this moment, since the actual torque of engine 2 is offset by $\Delta T$ due to the dispersion, the fuel consumption ratio becomes minimum at the operating point of the rotation speed Ni and the torque Pi/Ni-$\Delta T$. Accordingly, when engine 2 has the friction dispersion corresponding to $\Delta T$, target input shaft rotation speed table for obtaining the best fuel consumption ratio is obtained from the following expression (1).

$$(Pi', Ni') = ((Pi/Ni-\Delta T) \cdot Ni, Ni) \quad ---(1)$$

That is, the power obtaining the same input shaft rotation speed Ni is shifted from Pi to Pi' by $\Delta T$. Accordingly, target input shaft rotation speed Ni may be calculated on the basis of the table data constructed by the combinations (Pi', Ni').

Although influence of the friction dispersion depends on the rotation speed, the target engine torque correction based on the generator torque is very quickly converged. Accordingly, it is possible to properly determine the operating point of engine 2 from the expression (1).

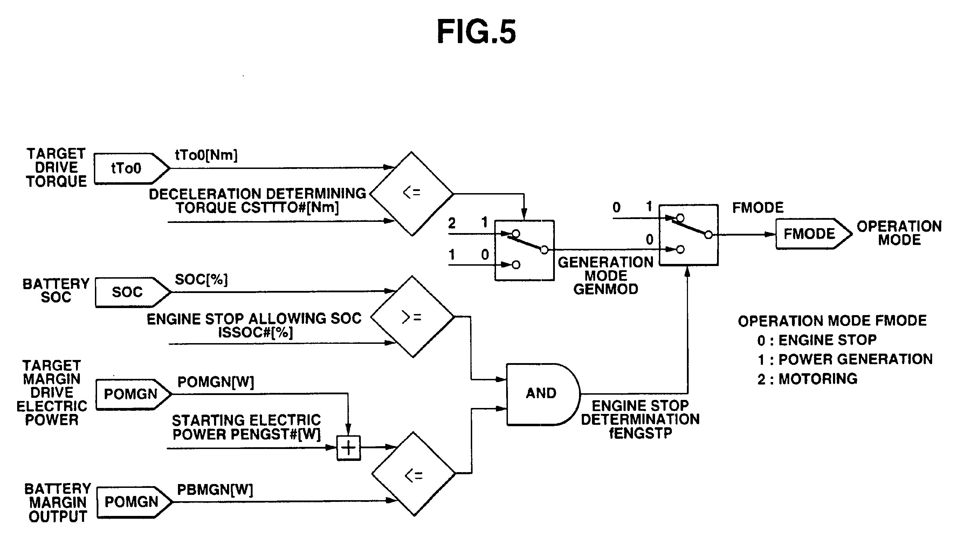

Fig. 5 is a control logic diagram of operation mode determining section 305. Operation mode determining section 305 comprises a GENMOD determining section and an fENGSTP determining section. The GENMOD determining section determines whether motor 4 is executing the driving operation or the regenerative operation, that is, this section determines whether first motor/generator 1 is executing the generating operation or motoring, on the basis of the target drive torque value sent from target driving torque generating section 301. The fENGSTP determining section determines whether or not engine 2 is allowed to stop, on the basis of SOC of battery 6 sent from battery SOC calculating section 303 and a battery output margin sent from a battery output margin calculating section 304. The determination as to allowance of the engine stop is executed on the basis of the following two determining conditions. First condition is that it is determined whether or not battery 6 is put in a state capable of discharging energy, that is, whether or not SOC is greater than or equal to a predetermined value ISSOC#. Second condition is that it is determined whether or not battery 6 is capable of supplying the target margin drive electric power obtained at the target margin drive electric power calculating section 302 and the electric power (starting electing power PENGST#) needed in restart. The target margin drive electric power is an additional electric power needed in a case that motor 4 is required to output an allowable maximum torque according to the driver's accelerating operation from a motor drive electric power of the present traveling condition. The battery margin output represents a battery capacity of outputting a further output from a present battery output. When battery 6 is capable of supplying all of electric power needed in second motor/generator 4 during a period from a restart of engine 2 to a restart of the power generating operation is covered, the engine stop allowance is established.

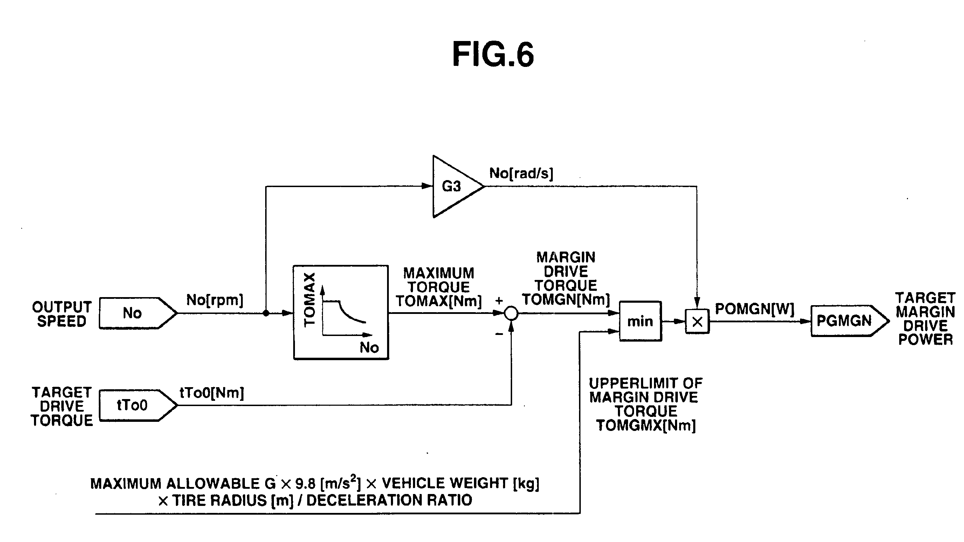

Fig. 6 shows a control logic diagram of target margin drive electric power calculating section 302. On the basis of motor rotation speed No, a maximum torque TOMAX of second motor/generator 4 at the present motor rotation speed No is obtained from map data. A margin drive torque TOMGN is calculated by subtracting a present target drive torque basic value tTo0 from maximum drive torque TOMAX. Margin drive torque TOMGN depends on the performance of second motor/generator 4. However, some motors performing a motor specification tend to generate excessive driving force and apply strange feel to the driver if all of the margin torque is outputted. In order to avoid this trouble, a margin drive torque upper limit has been determined on the basis of the maximum allowable acceleration. Accordingly, target margin drive electric power POMGN is obtained by multiplying the margin drive torque and the motor rotation speed.

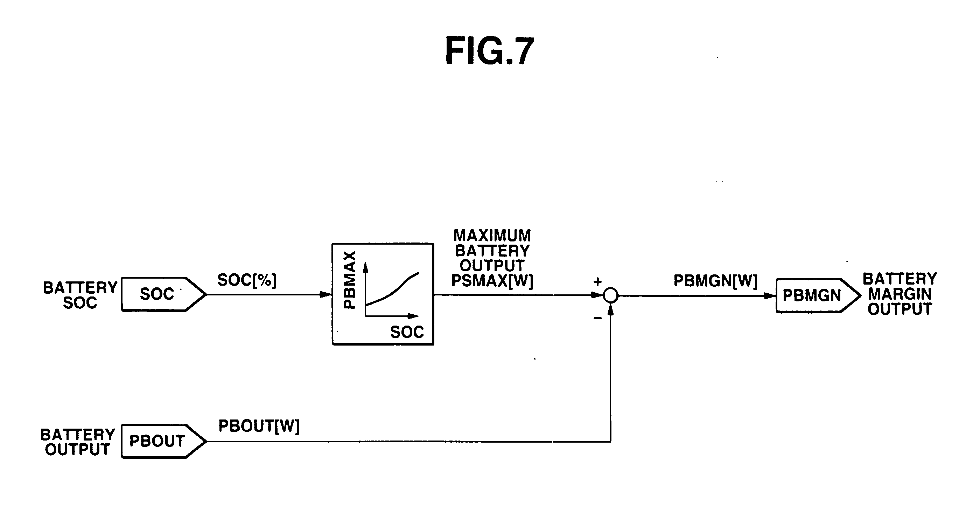

Fig. 7 shows a control logic diagram of battery margin output calculating section 304. At this section 304, the maximum output of secondary battery 6 is calculated on the basis of SOC, and a battery margin output PBMGM is calculated by subtracting a present battery output from the maximum output.

Figs. 8 through 10 show control logic diagrams of throttle opening correction quantity calculating section 314 corresponding to an engine torque correcting means. At this section 314, the target throttle opening is corrected by an offset correction method so that a relationship of the engine intake air quantity relative to the throttle opening corresponds to a predetermined standard value. Since this correction control is executed on the basis of a relationship between the throttle opening and the intake air quantity, it is possible to execute the correction, regardless of the engine torque and independent from a target engine torque correcting calculation. That is, even if both of the throttle opening correcting control and the target engine torque correcting control are simultaneously executed, they do not interfere with each other.

Throttle opening area ATP01 is obtained based on throttle opening TP01QL, and ADNVQL is obtained by diving throttle opening area ATP01 by a multiple of the engine displacement and the engine speed. ADNVQL represents a normalized intake system opening per each cylinder during one rotation of the crankshaft. A target basic volume efficiency QHOQL is retrieved from a table and the normalized opening area ADNVQL. This method is characterized that the volumetric efficiency of intake air relative to the normalized opening area is univocally determined, regardless of the engine displacement, the engine speed and the specification of throttle valve. A proportional relationship is established between the volumetric efficiency and fuel injection basic pulse width TP. TP is employed in the engine control as a basic parameter indicative of intake air and load. In this first embodiment, by comparing a target basic pulse width TPQLR obtained from QHOAL and a detected value TP, a target throttle opening offset learning update calculation is executed, and the correction quantity of the throttle opening is obtained.

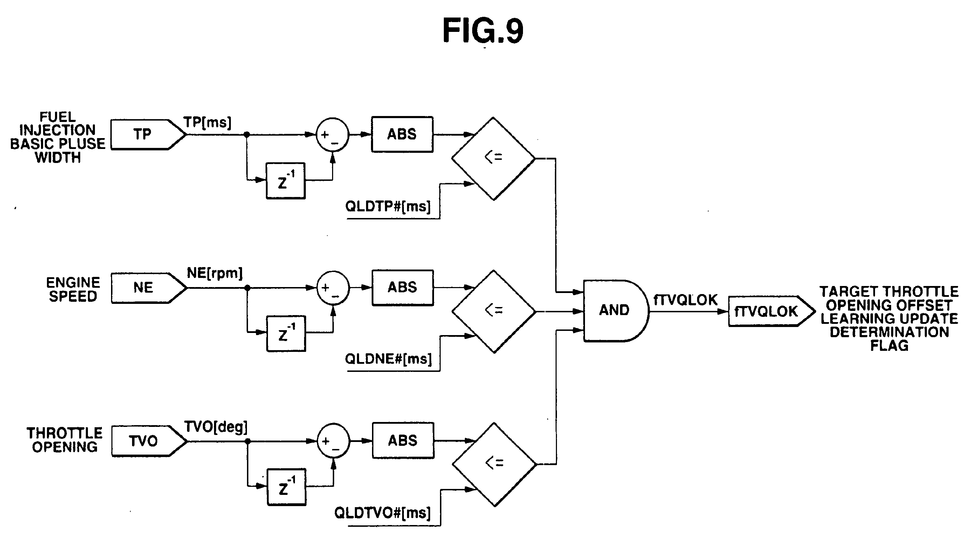

Fig. 9 shows a control logic diagram of the target throttle opening offset learning update condition determining part in Fig. 8. When variations of fuel injection basic pulse width TP, engine rotation speed NE and throttle opening TVO are within the predetermined allowable ranges, respectively, that is, when it is considered that engine 2 is controlled in a normal operating condition, this target throttle opening offset learning update calculation is allowed.

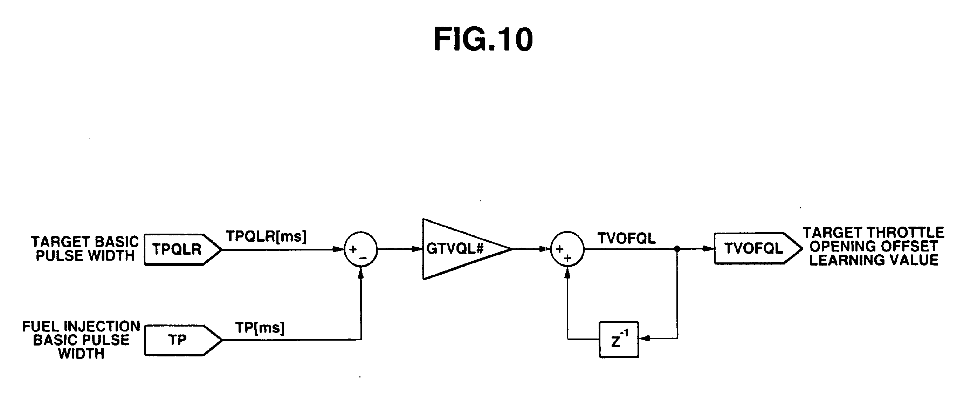

Fig. 10 is a control logic diagram of the target throttle opening offset learning update calculating section in Fig. 8. At this section, a difference between target basic pulse width TPQLR and fuel injection basic pulse width TP obtained from intake air detection value is obtained, and a target throttle opening offset learning value is then obtained by integrating a multiple of the difference and a gain GTVQL#.

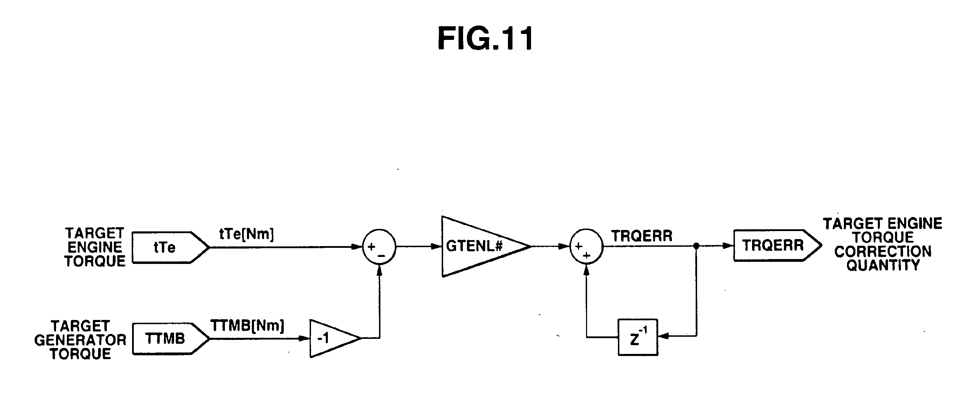

Fig. 11 shows a control logic diagram of a target engine torque correction quantity calculating section 307. At this section 307, a target engine torque correction quantity TRQERR is calculated by obtaining a difference between a target engine torque tTe and a multiple of a target generator torque TTMB and -1, and by integrating a multiple of the obtained difference and a gain GTENL#. Herein, target generator torque corresponds to an engine axial torque detection value. That is, engine axial torque corresponds to a generator torque, and it is possible to control the generator torque at a target value. Accordingly, it is possible to know the actual axial torque to engine 2 from the target toque of first motor/ generator 1. Transmission control unit 7b calculates target generator torque TTMB as a torque needed for adjusting the rotation speed of first motor/generator 1 to the target rotation speed.

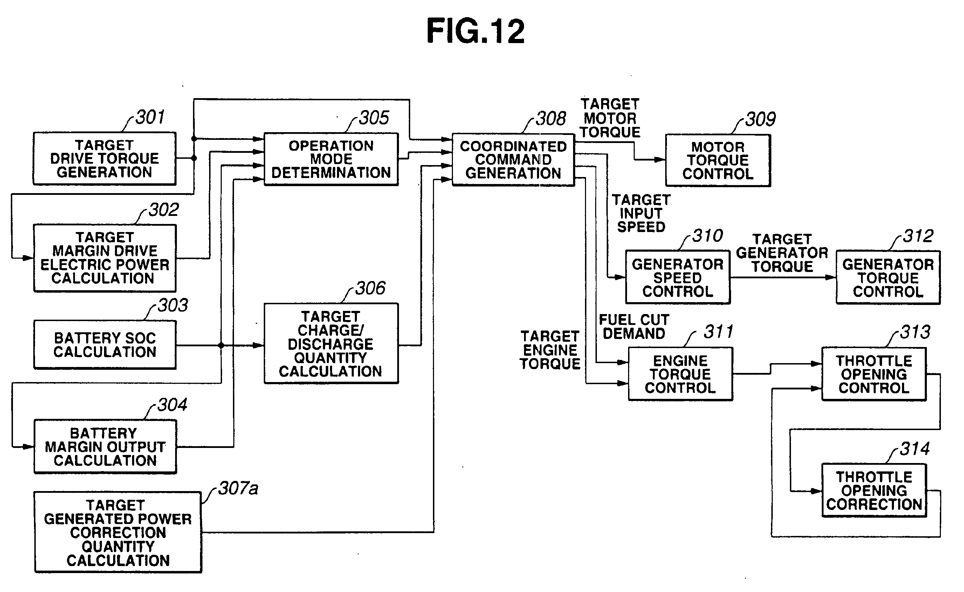

Fig. 12 is a control block diagram showing a second embodiment of the control system of the hybrid vehicle according to the present invention.

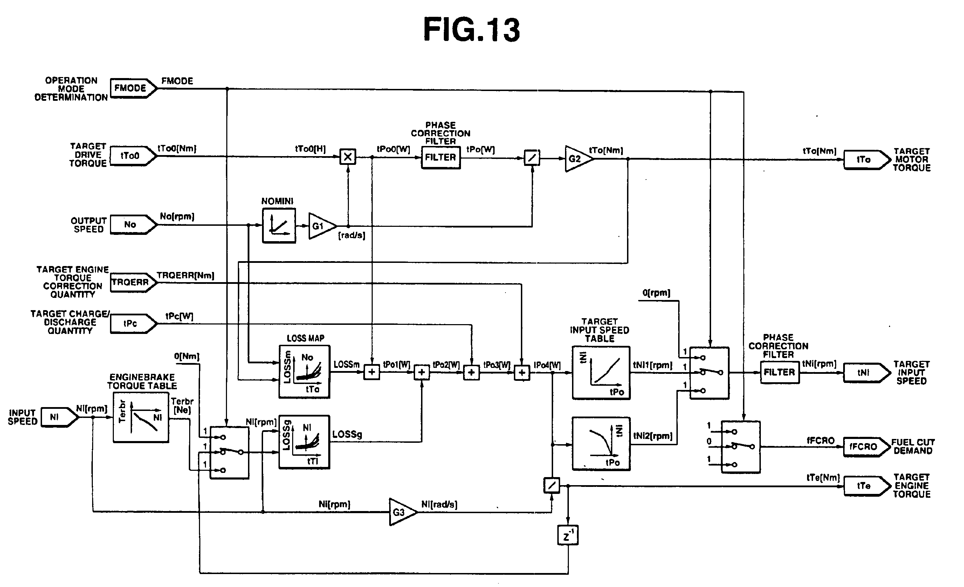

In this second embodiment, a target generated electric power correction quantity calculating section 307a is newly provided instead of target engine torque correction quantity calculating section 307 of Fig. 3. Fig. 13 is a control logic diagram of a coordinated command value generating section 308 employed in the second embodiment. Values tP0, tP1, tP2 and tP3 in Fig. 13 correspond to target generated electric power basic values, and a value tP04 corresponds to a target generated electric power.

In this second embodiment, only the dispersion of the generated torque due to the dispersion of the intake air quantity is corrected using the throttle opening correction quantity calculation. As to the dispersion of the friction, the torque correction is not executed. As shown in Fig. 1C, when there is only the friction dispersion, and when the dispersion of the generated electric power due to the dispersion of the engine torque is corrected, that is, when the generated electric power is corrected so that the actual generated electric power is adjusted to the target value according to a best fuel-consumption line, it becomes possible to control motor/generator 2 without deviating from the best fuel-consumption line. As compared with the first embodiment, it becomes possible to execute the best fuel-consumption operation without providing a processing section which requires a relatively complex calculation such as the calculation using the engine torque error correction adaptive target input rotation table.

Since the second embodiment is arranged so as not to execute the correction of the torque dispersion generated by the friction dispersion in contrast to the first embodiment where the engine torque is corrected, there is a difference between the target engine torque and the actual engine torque. Therefore, there is a possibility that the accuracy of the calculation based on the target engine torque is lowered.

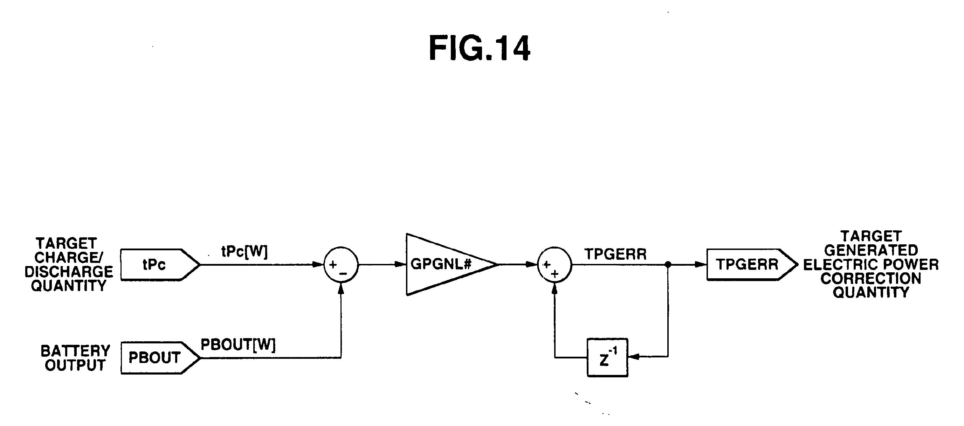

Fig. 14 is a control logic diagram of target generated electric power correction quantity calculating section 307a. As is similar to the processing in Figs. 10 and 11, target generated electric power correction quantity TPGERR is obtained by multiplying the gain GPGNL# and the difference between the target charge/discharge quantity and the battery output, and by integrating the obtained multiple. In Fig. 14, battery output PBOUT corresponds to a generation electric power detection value and is calculated in transmission control unit 7b on the basis of the terminal voltage of battery 6 and a current detection value. In this second embodiment, first motor/generator 1 and second motor/generator 4 are connected to battery 6. Therefore the following expressions are established.

$$\text{[Target Generated Electric Power]} - \text{[Target Discharge Electric Power]} = \text{[Target Charge/Discharge Electric Power tPc]}$$

$$\text{[Actual Discharge Electric Power]} - \text{[Actual Generated Electric Power]} = \text{[Battery Output PBOUT]}$$

Since it is difficult to directly detect the actual generated electric power, the battery output PBOUT is detected as a substitute. Although the generated electric power correction quantity should be calculated according to a difference between the target generated electric power and the actual generated electric power, the difference is substituted by a difference between the target charge/discharge electric power tPc and battery output PBOUT on the assumption that the control of second motor/generator 4 is accurately executed in Fig. 14, that is, the target discharge electric power is equal to the actual discharge electric power.

Although the invention has been described above by reference to certain embodiments of the invention, the invention is not limited to the embodiments described above. Modifications and variations of the embodiments described above will occur to those skilled in the art, in light of the above teaching. The scope of the invention is defined with reference to the following claims.

**Claims**

1.    A control system for a hybrid vehicle, the hybrid vehicle being equipped with an internal combustion engine which is operable independent from a drive line of the hybrid vehicle and a rotating machine which has an electric power generating function, the engine and the rotating machine being rotatably interlocked, the control system comprising:

a torque correcting section that corrects a dispersion of a torque of the engine by controlling an intake air quantity of the engine;

a target generated electric power calculating section that calculates a target generated electric power of the rotating machine;

an engine control section that controls the torque of the engine on the basis of the target axial torque;

a rotating machine control section that controls a rotation speed of the rotating machine on the basis of the target rotation speed of the rotating machine;

a torque detecting that detects the torque of the engine;

**characterized by**

a target torque calculating section that calculates a target torque of the engine from the target generated electric power, a rotation speed of the engine, and a torque correction quantity;

a target rotation speed calculating section that calculates the target rotation speed of the rotating machine from the target generated electric power and the torque correction quantity; and

a torque-correction-quantity calculating section that calculates the torque-correction-quantity from the target axial torque and the detected torque.

2. The control system as claimed in claim 1, wherein the engine torque correcting section comprises an intake air quantity control section for controlling an intake air quantity of the engine and an intake air quantity detecting section for detecting the intake air quantity, the engine torque correcting section correcting the engine torque by feedback controlling the intake air quantity at a target correction quantity on the basis of the detected intake air quantity.

3. The control system as claimed in claim 1, wherein the drive line is arranged such that the engine and the rotating machine are capable of being connected and disconnected via the clutch, the drive line comprises a second rotating machine having a motor function, the second rotating machine being driven by at least one of electric power generated by first rotating machine and electric power stored in a battery.

4. The control system as claimed in claim 1, wherein the intake air quantity control section includes an electronically controlled throttle device which is capable of electronically controlling an opening state of a throttle valve of the engine according to the operating condition.

5. A method of controlling an internal combustion engine and a rotating machine which are rotatably interlocked in a hybrid vehicle, comprising:

correcting a dispersion of a torque of an engine by controlling an intake air quantity of the engine;

calculating a target generated electric power of the rotating machine;

controlling the torque of the engine on the basis of the target torque;

controlling a rotation speed of the rotating machine on the basis of the target rotation speed of the rotating machine;

detecting the torque of the engine;

**characterized by**

calculating a target torque of the engine from the target generated electric power, a rotation speed of the engine and a torque correction quantity;

calculating the target rotation speed of the rotating machine from the target generated electric power and a torque correction quantity;

calculating the torque correction quantity from the target torque and the detected torque.

## Patentansprüche

1. Steuer/-Regelsystem für ein Hybridfahrzeug, wobei das Hybridfahrzeug mit einem Verbrennungsmotor, der unabhängig von einem Antriebsstrang des Hybridfahrzeugs betrieben werden kann, und einer Rotationsmaschine, die eine elektrische Leistung erzeugende Funktion aufweist, ausgestattet ist, wobei der Motor und die Rotationsmaschine rotierbar miteinander verriegelt sind, wobei das Steuer-/Regelsystem umfasst:

einen Drehmoment-Korrekturabschnitt, der eine Streuung eines Drehmoments des Motors korrigiert, indem einer Ansaugluftmenge des Motors gesteuert/geregelt wird;

einen Berechnungsabschnitt für eine elektrische Zielerzeugungsleistung, der eine elektrische Zielerzeugungsleistung der Rotationsmaschine berechnet;

einen Motor- Steuer-/Regelabschnitt, der das Drehmoment des Motors auf der Basis des Ziel-Achsendrehmoments steuert/regelt;

einen Rotationsmaschine-Steuer-/Regelabschnitt, die eine Drehzahl der Rotationsmaschine auf der Basis der Zieldrehzahl der Rotationsmaschine steuert/regelt;

eine Drehmomenterfassung, die das Drehmoment des Motors erfasst;

**gekennzeichnet durch**:

einen Zieldrehmoment-Berechnungsabschnitt, der ein Zieldrehmoment des Motors aus der elektrischen Zielerzeugungsleistung, einer Drehzahl des Motors und einer Drehmomentkorrekturgröße berechnet;

einen Zieldrehzahl-Berechnungsabschnitt, der die Zieldrehzahl der Rotationsmaschine aus der elektrischen Zielerzeugungsleistung und der Drehmomentkorrekturgröße berechnet; und

einen Drehmomentkorrekturgröße-Berechnungsabschnitt, der die Drehmomentkorrekturgröße aus dem Ziel-Achsendrehmoment und dem erfassten Drehmoment berechnet.

2. Steuer-/Regelsystem gemäß Anspruch 1, wobei der Motordrehmoment-Korrekturabschnitt einen Ansaugluftmenge-Steuer-/Regelabschnitt zum Steuern/Regeln einer Ansaugluftmenge des Motors und einen Ansaugluftmenge-Erfassungsabschnitt zum Erfassen der Ansaugluftmenge umfasst, wobei der Motordrehmoment-Korrekturabschnitt das Motordrehmoment korrigiert, indem die Ansaugluftmenge auf der Basis der erfassten Ansaugluftmenge mittels Feedback auf eine Ziel-Korrekturmenge gesteuert/geregelt wird.

3. Steuer-/Regelsystem gemäß Anspruch 1, wobei der Antriebsstrang so angeordnet ist, dass der Motor und die Rotationsmaschine über die Kupplung gekuppelt und entkuppelt werden können, der Antriebsstrang eine zweite Rotationsmaschine mit einer Motorfunktion umfasst, wobei die zweite Rotationsmaschine durch die durch die erste Rotationsmaschine erzeugte elektrische Leistung und/oder die in einer Batterie gespeicherte elektrische Leistung angetrieben wird.

4. Steuer-/Regelsystem gemäß Anspruch 1, wobei der Ansaugluftmenge-Steuer-/Regelabschnitt eine elektronisch gesteuerte/geregelte Drosselvorrichtung umfasst, die einen Öffnungszustand eines Drosselventils des Motors entsprechend der Betriebsbedingung elektronisch steuern/regeln kann.

5. Verfahren zum Steuern-/Regeln eines Verbrennungskraftmotors und einer Rotationsmaschine, die in einem Hybridfahrzeug rotierbar miteinander verriegelt sind, umfassend:

Korrigieren einer Streuung eines Drehmoments eines Motors, indem eine Ansaugluftmenge des Motors gesteuert/geregelt wird;

Berechnen einer elektrischen Zielerzeugungsleistung der Rotationsmaschine;

Steuern/Regeln des Drehmoments des Motors auf der Basis des Zieldrehmoments;

Steuern/Regeln einer Drehzahl der Rotationsmaschine auf der Basis der Zieldrehzahl der Rotationsmaschine;

Erfassen des Drehmoments des Motors;

**gekennzeichnet durch**:

Berechnen eines Zieldrehmoments des Motors aus der elektrischen Zielerzeugungsleistung, einer Drehzahl des Motors und einer Drehmomentkorrekturgröße;

Berechnen der Zieldrehzahl der Rotationsmaschine aus der elektrischen Zielerzeugungsleistung und einer Drehmomentkorrekturgröße;

Berechnen der Drehmomentkorrekturgröße aus dem Zieldrehmoment und dem erfassten Drehmoment.

**Revendications**

1. Système de commande pour un véhicule hybride, le véhicule hybride étant équipé d'un moteur à combustion interne qui peut être mis en oeuvre indépendamment d'une chaîne cinématique du véhicule hybride et d'une machine tournante qui a une fonction de génération d'énergie électrique, le moteur et la machine tournante étant verrouillés réciproquement en rotation, le système de commande comprenant :

une section de correction de couple qui corrige une dispersion d'un couple du moteur en commandant une quantité d'air d'admission du moteur ;
une section de calcul d'énergie électrique générée cible qui calcule une énergie électrique générée cible de la machine tournante ;
une section de commande de moteur qui commande le couple du moteur sur la base du couple axial cible ;
une section de commande de machine tournante qui commande une vitesse de rotation de la machine tournante sur la base de la vitesse de rotation cible de la machine tournante ;
une section de détection de couple qui détecte le couple du moteur ;

**caractérisé par**
une section de calcul de couple cible qui calcule un couple cible du moteur à partir de l'énergie électrique générée cible, d'une vitesse de rotation du moteur, et d'une quantité de correction de couple ;
une section de calcul de vitesse de rotation cible qui calcule la vitesse de rotation cible de la machine tournante à partir de l'énergie électrique générée cible et de la quantité de correction de couple ; et
une section de calcul de quantité de correction de couple qui calcule la quantité de correction de couple à partir du couple axial cible et du couple détecté.

2. Système de commande selon la revendication 1, dans lequel la section de correction de couple de moteur comprend une section de commande de quantité d'air d'admission pour commander une quantité d'air d'admission du moteur et une section de détection de quantité d'air d'admission pour détecter la quantité d'air d'admission, la section de correction de couple de moteur corrigeant le couple du moteur en commandant par rétroaction la quantité d'air d'admission à une quantité de correction cible sur la base de la quantité d'air d'admission détectée.

3. Système de commande selon la revendication 1, dans lequel la chaîne cinématique est agencée de sorte que le moteur et la machine tournante soient capables d'être connectés et déconnectés par l'intermédiaire de l'embrayage, la chaîne cinématique comprend une deuxième machine tournante ayant une fonction de moteur, la deuxième machine tournante étant entraînée par au moins l'une de l'énergie électrique générée par la première machine tournante et de l'énergie électrique stockée dans une batterie.

4. Système de commande selon la revendication 1, dans lequel la section de commande de quantité d'air d'admission comprend un dispositif de papillon commandé électroniquement qui est capable de commander électroniquement un état d'ouverture d'un papillon des gaz du moteur en fonction de la condition de fonctionnement.

5. Procédé de commande d'un moteur à combustion interne et d'une machine tournante qui sont verrouillés réciproquement en rotation dans un véhicule hybride, comprenant les étapes consistant à :

corriger une dispersion d'un couple d'un moteur en commandant une quantité d'air d'admission du moteur ;
calculer une énergie électrique générée cible de la machine tournante ;
commander le couple du moteur sur la base du couple cible ;
commander une vitesse de rotation de la machine tournante sur la base de la vitesse de rotation cible de la machine tournante ;
détecter le couple du moteur ;

**caractérisé par** les étapes consistant à :

calculer un couple cible du moteur à partir de l'énergie électrique générée cible, d'une vitesse de rotation du moteur, et d'une quantité de correction de couple ;
calculer la vitesse de rotation cible de la machine tournante à partir de l'énergie électrique générée cible et d'une quantité de correction de couple ;
calculer la quantité de correction de couple à partir du couple cible et du couple détecté.

# FIG.1A

# FIG.1B

# FIG.1C

FIG.1A

BEST FUEL CONSUMPTION ZONE

TARGET TORQUE

ISO-FUEL-CONSUMPTION LINE

ISO-OUTPUT LINE

ACTUAL TORQUE

TORQUE CORRECTION

CRANKSHAFT TORQUE

ENGINE SPEED

FIG.1B

OPERATING POINT CORRECTION

TORQUE CORRECTION

CRANKSHAFT TORQUE

ENGINE SPEED

i) TORQUE CORRECTION + OPERATING POINT CORRECTION

FIG.1C

GENERATED-ELECTRIC-POWER-CORRECTION

CRANKSHAFT TORQUE

ENGINE SPEED

ii) GENERATED ELECTRIC POWER CORRECTION

11

# FIG.2

# FIG.3

```
TARGET          OPERATION         COORDINATED       TARGET MOTOR
DRIVE TORQUE    MODE              COMMAND           TORQUE
GENERATION /301 DETERMINATION /305 GENERATION /308
```

TARGET
DRIVE TORQUE
GENERATION
/301

TARGET
MARGIN DRIVE
ELECTRIC POWER
CALCULATION
/302

BATTERY SOC
CALCULATION
/303

BATTERY
MARGIN OUTPUT
CALCULATION
/304

TARGET ENGINE
TORQUE
CORRECTION
QUANTITY
CALCULATION
/307

OPERATION
MODE
DETERMINATION
/305

TARGET CHARGE
QUANTITY
CALCULATION
/306

COORDINATED
COMMAND
GENERATION
/308

TARGET
MOTOR
TORQUE

MOTOR
TORQUE
CONTROL
/309

TARGET
INPUT
SPEED

GENERATOR
SPEED
CONTROL
/310

TARGET
GENERATOR
TORQUE

GENERATOR
TORQUE
CONTROL
/313

FUEL CUT
DEMAND

ENGINE
TORQUE
CONTROL
/311

TARGET
ENGINE
TORQUE

THROTTLE
OPENING
CONTROL
/313

THROTTLE
OPENING
CORRECTION
/314

EP 1 323 564 B1

# FIG.4

# FIG.5

TARGET DRIVE TORQUE → tTo0 → tTo0[Nm]

DECELERATION DETERMINING TORQUE CSTTTO#[Nm]

$\leq$

2 1
1 0

GENERATION MODE GENMOD

0 1
0

FMODE → FMODE → OPERATION MODE

BATTERY SOC → SOC → SOC[%]

ENGINE STOP ALLOWING SOC ISSOC#[%]

$\geq$

TARGET MARGIN DRIVE ELECTRIC POWER → POMGN → POMGN[W]

STARTING ELECTRIC POWER PENGST#[W]

$+$

$\leq$

AND

ENGINE STOP DETERMINATION fENGSTP

BATTERY MARGIN OUTPUT → POMGN → PBMGN[W]

OPERATION MODE FMODE
0 : ENGINE STOP
1 : POWER GENERATION
2 : MOTORING

# FIG.6

EP 1 323 564 B1

# FIG.7

EP 1 323 564 B1

BATTERY SOC — SOC — SOC[%] → PBMAX (SOC) → MAXIMUM BATTERY OUTPUT PSMAX[W] → + — PBMGN[W] → PBMGN → BATTERY MARGIN OUTPUT

BATTERY OUTPUT — PBOUT — PBOUT[W] → −

# FIG.8

# FIG.9

EP 1 323 564 B1

# FIG.10

TARGET BASIC PULSE WIDTH → TPQLR → TPQLR[ms]

FUEL INJECTION BASIC PULSE WIDTH → TP → TP[ms]

$+$ $-$ → GTVQL# → $+$ $+$ → TVOFQL → TVOFQL → TARGET THROTTLE OPENING OFFSET LEARNING VALUE

$z^{-1}$

EP 1 323 564 B1

# FIG.11

TARGET
ENGINE
TORQUE — tTe — tTe[Nm]

TARGET
GENERATOR — TTMB — TTMB[Nm] — -1
TORQUE

GTENL#

TRQERR

Z⁻¹

TRQERR — TARGET ENGINE
TORQUE
CORRECTION
QUANTITY

# FIG.12

# FIG.13

EP 1 323 564 B1

# FIG.14

TARGET
CHARGE/
DISCHARGE
QUANTITY

$tPc$

$tPc[W]$

$+$ $-$

GPGNL#

$+$ $+$

TPGERR

TPGERR

TARGET
GENERATED
ELECTRIC POWER
CORRECTION
QUANTITY

BATTERY
OUTPUT

PBOUT

$PBOUT[W]$

$z^{-1}$

EP 1 323 564 B1

**REFERENCES CITED IN THE DESCRIPTION**

**Patent documents cited in the description**

- EP 0698520 A
- JP 2000088010 A

- US 6155954 A